Europäisches Patentamt

European Patent Office

Office européen des brevets

(11) Publication number: **0 261 950**
A2

## (12) EUROPEAN PATENT APPLICATION

(21) Application number: 87308422.2

(22) Date of filing: 23.09.87

(51) Int. Cl.⁴: **B 01 D 53/14**
B 01 D 53/34, B 01 J 20/04

(30) Priority: 25.09.86 JP 226926/86

(43) Date of publication of application:
30.03.88 Bulletin 88/13

(84) Designated Contracting States:
DE ES FR GB IT NL

(71) Applicant: **Osaka Sanso Kogyo KK**
**Sumitomo Seimei Shin-Osaka Kita Bldg 1-14 Miyahara**
**4-Chome, Yodogawa-ku Osaka 532 (JP)**

(72) Inventor: **Morikawa, Yoshinori**
**67 Morikawara-cho**
**Moriyama-shi, Shiga Prefecture (JP)**

**Nishizono, Mitsutaka,**
**19-8 Hanakawa, 2-chome**
**Nishiyodogawa-ku, Osaka (JP)**

(74) Representative: **Wickham, Michael**
**c/o Patent and Trademark Department The BOC Group**
**plc Chertsey Road**
**Windlesham Surrey GU20 6HJ (GB)**

(54) **Waste gas treating agent.**

(57) A novel semi-wet or wet-type agent for treating a waste gas in the semiconductor industry is obtained by impregnating a solid alkaline earth metal hydroxide (eg calcium hydroxide) with an aqueous solution of an alkali metal hydroxide (eg potassium hydroxide) to such an extent that said alkaline earth metal hydroxide becomes wet. The waste gas treating agent does not deteriorate with time and is capable of making harmless waste gases discharged from semiconductor manufacturing apparatuses in the seimicondutor industry, such as volatile inorganic hydrides, e.g., arsine, phosphine and silane, and volatile inorganic halides, e.g., dichlorosilane, boron trifluoride and boron trichloride. The treating agent typically includes 15 to 35% weight of water and 3 to 8% by weight of the alkali metal hydroxide.

Fig. 3

Fig. 4

# 0 261 950

**Description**

<u>WASTE GAS TREATING AGENT</u>

The present invention relates to a waste gas treating agent which makes harmless waste gases discharged from semiconductor manufacturing apparatuses in the semiconductor industry, such as volatile inorganic hydrides, e.g., arsine, phosphine and silane, and volatile inorganic halides, e.g., dischlorosilane, boron trifluoride and boron trichloride.

With the remarkable developement of the semiconductor industry in recent years, there have been increases in the number of kinds and quantities of gases that are used in semiconductor manufacturing processes. Examples of gases that are employed in epitaxial and CVD apparatuses include silane, dichlorosilane, disilane and trichlorosilane, while doping gases as arsine, phosphine and diborane are employed in diffusion and ion implantation apparatuses, and boron trifluoride, phosphorus trichloride and nitrogen trifluoride and the like are used in dry etching apparatus.

These gases are extremely noxious, and some of them have strong corrosiveness. Accordingly, it is necessary to carry out some treatment for making harmless these gases discharged from semiconductor manufacturing apparatuses.

Various kinds of method have heretofore been adopted to treat these noxious and corrosive gases. Typical conventional methods include purifying using an aqueous alkaline solution and oxidizing process using an aqueous solution of an oxidizing agent. In addition to these methods, treating methods that utilize an absorptive treating agent formed by impregnating a porous inorganic silicate such as diatomaceous earth with an aqueous alkaline solution, an aqueous solution of an oxidizing agent, or the like have also been proposed (see Japanese Patent Public Disclosure Nos. 58-128146 and 60-175522).

The conventional treating methods that utilize an aqueous alkaline solution can treat hydrolysable acidic gases such as silane, disilane, dichlorosilane, boron trichloride and boron trifluoride. However, these treating methods need to treat waste water resulting from the treating process. The scrubbing methods that utilize aqueous solutions of oxidizing agents, such as an aqueous solution of potassium permanganate and an aqueous solution of sodium carbonate hypochlorite, can treat doping gases such as arsine, phosphine and diborane. However, these treating methods using said aqueous solutions suffer from unsatisfactory effectiveness in treating silicon compounds and halogen compounds and also need to treat waste water in the same way as in the case of the above-described methods using an aqueous alkaline solution. In order to overcome these problems, a semi-wet or wet type agent formed by impregnating a treating liquid into a carrier such as diatomaceous earth has been developed. Such conventional semi-wet type solid treating agents employed to treat waste gases such as silicon compounds and halogen compounds use diatomaceous earth, alumina, zeolite or clay as a carrier and an aqueous alkaline solution as a treating liquid which is to be impregnated into the carrier. In this case, since the principal component of the carrier is amorphous $SiO_2$ or $Al_2O_3$, the component reacts with the coexisting aqueous alkaline solution, e.g., KOH or NaOH, as time passes, and the alkaline content which is needed to treat a waste gas is thus consumed, resulting in a considerable lowering in the capacity of treating waste gases, particularly silane gas. Thus, the conventional semi-wet or wet type treating agents suffer from the self-deterioration with time.

Concerning the treatment of noxious gases that are employed in the semiconductor industry, it is known that hydroxides of alkaline metals, e.g., NaOH and KOH, are effective in treating silane gas. However, conventional solid treating agents which are obtained by impregnating aqueous solutions of these hydroxides of alkaline metals into diatomaceous earth or the like are incapable of stably maintaining for a long time the alkaline conditions of NaOH, KOH or the like which is active with respect to silane gas and consequently suffer from self-deterioration with time. Accordingly, it has been desired to develop a solid treating agent which is free from these disadvantages.

We have made various studies in order to obtain a carrier for a solid treating agent which causes no self-deterioration with time on the following fundamental conditions:

(1) the carrier, when wet-mixed with an aqueous alkaline solution, will not react therewith, and the carrier per se has treating capacity and is still able to serve as a carrier effectively.

(2) in order to improve the condition of the gas-liquid-solid contact between a gas to be treated and a solid treating agent, the carrier needs to have an appropriate water retention capacity and must be insoluble in water added thereto and capable of maintaining its solid state.

As a result we have found that hydroxides of alkaline earth metals are very useful as carriers for the above-described purposes. The present invention has been accomplished on the basis of this finding.

Accordingly, it is a primary object of the present invention to provide a novel solid agent for treating a waste gas which causes no self-deterioration with time.

To this end, the present invention provides a semi-wet or wet type agent for treating a waste gas in the semi-conductor industry obtained by impregnating a solid alkaline earth metal hydroxide with an aqueous solution of an alkali metal hydroxide to such an extent that said alkaline earth metal hydroxide becomes wet.

The invention will now be described by way of example with reference to the accompanying drawings, in which:

Fig. 1 is a flow sheet showing an experimental apparatus employed in the experiments carried out on solid treating agents, in which the reference numeral 1 denotes a treating column, 2 a gas inlet pipe, 3 a gas detector, and 4 a flowmeter;

Fig. 2 is a graph showing changes of a solid treating agent with time;

Fig. 3 is a graph showing the relationship between the treating capacity and the water content; and

Fig. 4 is a graph showing the relationship between the treating capacity and the potassium hydroxide content.

The present invention will be described hereinunder in detail.

Examples of hydroxides of alkaline earth metals which may be employed in the present invention include calcium hydroxide, barium hydroxide, magnesium hydroxide and strontium hydroxide. Among these hydroxides, calcium hydroxide is particularly superior, and it is inexpensive and therefore advantageous from the economical and industrial points of view. Calcium hydroxide may be used as a carrier in the shape of powder, granules, pellets or the like and it is, as a matter of course, possible to select an appropriate shape according to conditions of use.

As example of hydroxides of alkaline metals, sodium hydroxide and potassium hydroxide are well known and either of them may be employed. However, when solid treating agents are prepared respectively using aqueous solutions of sodium hydroxide and potassium hydroxide having the same concentration, sodium hydroxide is higher than potassium hydroxide in terms of viscosity of the liquid film covering the surfaces of particles of the treating agents and therefore the surface area of sodium hydroxide is smaller than that of potassium hydroxide. As a result, the treating capacity of sodium hydroxide is inferior to that of potassium hydroxide. Accordingly, potassium hydroxide is superior to sodium hydroxide from the viewpoint of performance.

The solid treating agent according to the present invention will be described hereinunder with silane gas employed as a waste gas which is to be treated.

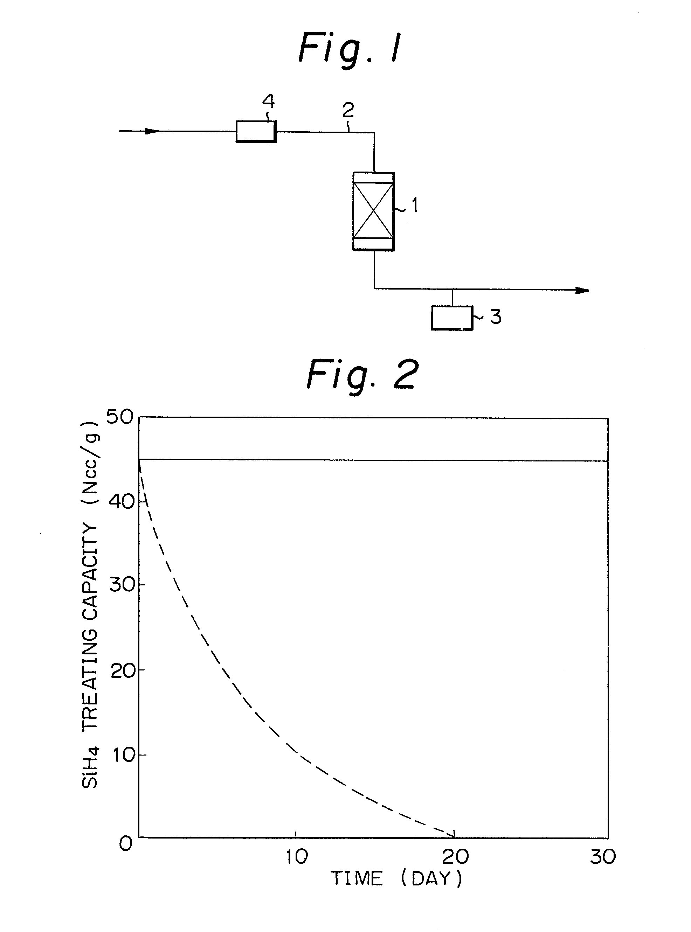

A solid treating agent according to the present invention was prepared by employing calcium hydroxide as a carrier and an aqueous solution of potassium hydroxide as an aqueous solution of a hydroxide of an alkaline metal and by soaking the aqueous solution in the carrier, and changes in the capacity of treating silane gas in accordance with the passage of time (number of days) after the preparation were examined. For comparison, the same measurement was carried out with respect to a conventional solid treating agent formed by impregnating an aqueous solution of an alkaline hydroxide into diatomaceous earth used as carrier. The result of measurement showed that, although the solid treating agent according to the present invention and the conventional solid treating agent had substantially the same silane gas treating capacity immediately after the preparation, the treating capacity of the conventional solid treating agent rapidly deteriorated with the passage of time after the preparation and its silane gas treating capacity become zero when about 20 days had elapsed after the preparation, whereas the solid treating agent according to the present invention showed substantially no change in the treating capacity irrespective of the passage of time after the preparation and maintained its initial treating capacity. Thus, the solid treating agent according to the present invention has long-term stability as shown in Fig. 2.

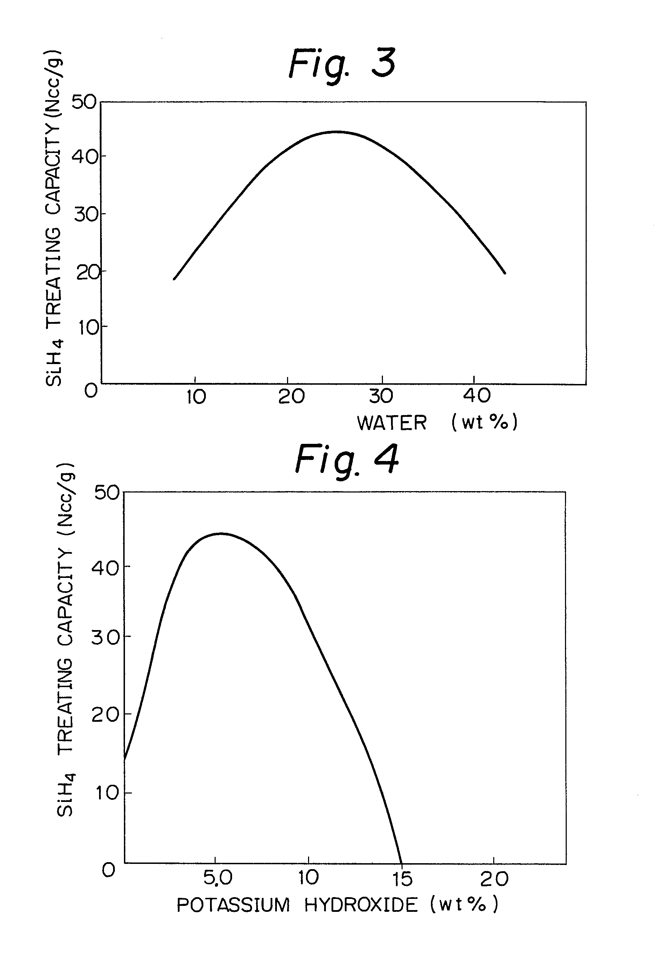

A series of experiments were carried out to find a method of making the best use of silane gas treating capacity of the solid treating agent according to the present invention. As a result, it has been found that it is important to appropriately select a mixing ratio of the aqueous solution of potassium hydroxide with respect to calcium hydroxide employed as a carrier and the concentration of the aqueous solution of potassium hydroxide. In the experiments, several different kinds of aqueous solutions were prepared by dissolving 10g of potassium hydroxide in water with the water content variously changed, and each of the resultant aqueous solutions was added to and mixed with 150g of calcium hydroxide to obtain several different kinds of solid treating agent. Twenty grams of each of the thus obtained solid treating agents was packed into a column having an inner diameter of 2cm and a length of 18cm, and the treating capacity of the agent was tested by passing a $N_2$ mixture gas containing 3vol% of $SiH_4$ at a flow rate of 200cc/min through the experimental apparatus shown in Fig. 1. The results of the experiment are shown in Fig. 3. In the graph shown in Fig. 3, the axis of ordinates represents the silane gas treating capacity, and the axis of abscissas represents the percentage of water content. Then, several different kinds of aqueous solution were prepared by dissolving potassium hydroxide in 40g of water with the potassium hydroxide content variously changed, and each of the resultant aqueous solutions was added to and mixed with 150g of calcium hydroxide to prepare several different kinds of solid treating agent. The treating capacity of each of the thus obtained solid treating agents was tested using the experimental apparatus shown in Fig. 1 and in accordance with the same method as the above. The results of the experiment are shown in Fig. 4.

In the graph shown in Fig. 4, the axis of the ordinate represents the silane gas treating capacity in the same way as in the Fig. 3, and the axis of abscissa represents the potassium hydroxide content. As will be understood from the results of the experiments, it has been found that excellent results are obtained when the mixing ratio is selected as follows: 52 to 77 wt% of calcium hydroxide (a hydroxide of an alkaline earth metal), 3 to 8 wt% of potassium hydroxide (a hydroxide of an alkaline metal) and 15 to 35 wt% of water. The composition may also contain up to 5% by weight of incidental ingredients such as impurities associated with the alkaline earth hydroxide. The thus prepared solid treating agent is a novel treating agent which possesses long-term stability and yet has a silane gas treating capacity which is equal to or higher than that of the conventional solid treating agents. The solid treating agent according to the present invention exhibits excellent treating capacity with respect to halogen gases, e.g., boron trifluoride, boron trichloride and hydrogen chloride, in addition to silane gas. If it is desired to provide a visual check on the conditions of the solid treating agent in use, a small amount of potassium permanganate which is known as an oxidizing agent may be added as colour-changing agent to the solid treating agent. By doing so, as the reaction progresses, the colour of the solid treating agent changes without any adverse effect on the silane gas treating capacity and the long-term stability. Since potassium permanganate also enables treatment of doping gases such as arsine, phosphine and germane, potassium permanganate may effectively be added within the range from 0.5 to 2.0% by weight.

The present invention will be described in more detail by way of Examples and Comparative Examples shown below.

Example 1

Potassium hydroxide (10g) was dissolved in water (40g), and the solution was added to and mixed with calcium hydroxide (150g) to obtain a solid treating agent. On the day when the agent was prepared and on every sixth day thereafter, the solid treating agent (20g) was packed into a column having an inner diameter of 2cm and a length of 18cm, and the treating capacity of the agent was tested by passing a $N_2$ mixture gas containing 3 vol% of $SiH_4$ at a flow rate of 200cc/min through the experimental apparatus shown in Fig. 1.

The breakthrough point of the solid treating agent was set at concentration of 5ppm. For comparison, a conventional solid treating agent was prepared by impregnating diatomaceous earth (100g) with a 10% aqueous potassium hydroxide solution (150g), and tested by the same method as the above. The results are shown in Fig. 2. In the graph shown in Fig. 2, the axis of ordinate represents the silane gas treating capacity, and the axis of abscissa represents the number of days elapsed after the day of preparation.

Example 2

Potassium hydroxide (10g) was dissolved in water (40g), and the solution was added to and wet-mixed with calcium hydroxide (150g) to obtain a solid treating agent (A). Further, potassium hydroxide (10g) and potassium permanganate (1.5g) were dissolved in water (40g), and the solution was added to and wet-mixed with calcium hydroxide (150g) to prepare a solid treating agent (B). Twenty grams of each of the treating agents (A) and (B) were packed into a column having an inner diameter of 2cm and a length of 18cm, and the capacity of treating various toxic and corrosive gases was measured using the experimental apparatus shown in Fig. 1. The results are shown in Table 1. The break through point of the solid treating agent with respect to each of the various gases shown in Table 1 was set at the allowable concentration of each gas. In regard to $BCl_3$, the break through point was set at a concentration of 5ppm.

## Table 1

Unit: $Ncm^3/g$

| Inlet Gas | Allowable Concentration (ppm) | Solid treating agent (A) | Solid treating agent (B) |
|---|---|---|---|
| $SiH_4$ | 5.0 | 43.5 | 43.5 |
| $AsH_3$ | 0.05 | unable to treat | 0.68 |
| $PH_3$ | 0.3 | " | 0.5 |
| $GeH_4$ | 0.2 | " | 0.21 |
| $H_2S$ | 10.0 | 52.8 | 54.3 |
| HCl | 5.0 | 67.5 | 69.6 |
| $BCl_3$ | - | 34.6 | 36.0 |
| $BF_3$ | 1.0 | 226.4 | 230.1 |

Comparative Example 1

Potassium hydroxide (4.8)g and potassium permanganate (1.4g) were dissolved in water (43.9g), and the solution was added to and mixed with activated charcoal (42.3g) to obtain a treating agent. The treating agent (20g) was packed into a column having an inner diameter of 2cm and a length of 18cm, and the treating capacity of the agent was measured by passing a $N_2$ mixture gas containing 3 vol% of $SiH_4$ at a flow rate of $200cm^3$/min through the experimental apparatus shown in Fig. 1 in the same way as in example 1. The break through point of the treating agent was set at a concentration of 5ppm. The results are shown in Table 2.

Comparative Example 2

Potassium hydroxide (4.1g) and potassium permanganate (1.0g) were dissolved in water (43g), and the solution was added to and mixed with active alumina (51.0g) to obtain a treating agent. The treating agent (20g) was packed into a column having an inner diameter of 2cm and a length of 18cm, and the treating capacity of the agent was measured by passing a $N_2$ mixture gas containing 3vol% of $SiH4$ at a flow rate of 200cc/min through the experimental apparatus shown in Fig. 1 in the same way as in Example 1. The break through point of the treating agent was set at a concentration of 5ppm. The results are shown in Table 2.

Comparative Example 3

Water glass (4.9g) was dissolved in water (21.9g), and the solution was added to and wet-mixed with potassium permanganate (36.6g) and diatomaceous earth (36.6g) to obtain a treating agent. The treating agent (20g) was packed into a column having an inner diameter of 2cm and a length of 18cm, and the treating capacity of the agent was measured by passing a $N_2$ mixture gas containing 3vol% of $SiH_4$ at a flow rate of 200cc/min through the experimental apparatus shown in Fig. 1 in the same way as in Example 1. The break through point of the treating agent was set at a concentration of 5ppm. The results are shown in Table 2.

Table 2

| | $SiH_4$ treating rate (Ncc/g) |
|---|---|
| Comparative Example 1 | 6.4 |
| Comparative Example 2 | 0.02 |
| Comparative Example 3 | 16.5 |

**Claims**

1. A semi-wet or wet-type agent for testing a waste gas in the semiconductor industry, obtained by impregnating a solid alkaline earth metal hydroxide with an aqueous solution of an alkali metal hydroxide to such an extent that said alkaline earth metal hydroxide becomes wet.

2. A treating agent according to claim 1, which comprises 52 to 77 wt% of a hydroxide of an alkaline earth metal, 3 to 8 wt% of a hydroxide of an alkali metal, and 15 to 35wt% of water, and up to 5% by weight of incidental ingredients.

3. A treating agent according to claim 1 or claim 2, wherein said hydroxide of an alkaline earth metal is calcium hydroxide.

4. A treating agent according to anyone of the preceding claims in which the alkali metal hydroxide is potassium hydroxide.

5. A treating agent according to any of the preceding claims, in which the agent has from 0,5 to 2% by weight of potassium permanganate added to it.

0261950

# Fig. 1

# Fig. 2

24·11·87

0261950

## Fig. 3

## Fig. 4